(19) Europäisches Patentamt
European Patent Office
Office européen des brevets

(11) **EP 1 432 500 B1**

(12) **EUROPEAN PATENT SPECIFICATION**

(45) Date of publication and mention
of the grant of the patent:
**07.03.2007 Bulletin 2007/10**

(51) Int Cl.:
***B01D 61/46*** *(2006.01)* ***G01N 27/447*** *(2006.01)*

(21) Application number: **02800050.3**

(86) International application number:
**PCT/DK2002/000658**

(22) Date of filing: **02.10.2002**

(87) International publication number:
**WO 2003/028862 (10.04.2003 Gazette 2003/15)**

(54) **SIEVE ELECTROOSMOTIC FLOW PUMP**

SIEBPUMPE ZUR ERZEUGUNG EINES ELEKTROOSMOTISCHEN FLUSSES

POMPE A ECOULEMENT ELECTROOSMOTIQUE A TAMIS

(84) Designated Contracting States:
**AT BE BG CH CY CZ DE DK EE ES FI FR GB GR IE IT LI LU MC NL PT SE SK TR**

(30) Priority: **02.10.2001 US 326228 P**

(43) Date of publication of application:
**30.06.2004 Bulletin 2004/27**

(73) Proprietor: **Sophion Bioscience A/S 2750 Ballerup (DK)**

(72) Inventors:
• **KUTCHINSKY, Jonatan,c/o Sophion Bioscience A/S DK-2750 Ballerup (DK)**
• **TABORYSKI, Rafael,c/o Sophion Bioscience A/S DK-2750 Ballerup (DK)**
• **BECH, Morten DK- 2840 Holte (DK)**

(74) Representative: **Johnstone, Helen Margaret Eric Potter Clarkson LLP Park View House 58 The Ropewalk Nottingham NG1 5DD (GB)**

(56) References cited:
EP-A- 0 485 370 WO-A-01/36321
GB-A- 2 141 737 US-A- 5 171 409
US-A- 5 632 876

## Description

The present invention provides a pump for generating an Electroosmotic Flow (EOF) in a solution in a canal, guide, pipe or equivalent. Electroosmotic flow is generated by application of an electric field through a solution in a canal defined by insulating walls. More particular, the invention provides an EOF pump design based on a perforated membrane (a sieve) in a canal with electrodes on both sides. The EOF pump can be readily integrated in small systems such as microsystems, micromachines, microstructures etc. and allows for an efficient and easily controllable liquid flow in such systems.

Electroosmotic devices are disclosed i.e. in GB-A-2 141 737 and US-A-5 171 409.

According to the present invention, an electroosmotic flow in an ionic solution in a canal may be generated using an electrical field. In order to create the electroosmotic flow, the geometry as well as the materials of the canal has to be carefully chosen. It is an advantage of the present invention that it provides a pump for generating and controlling liquid flow in small flow systems. Moreover, the pump according to the invention may be fabricated using materials and processing technology typically used to fabricate small-scale systems and devices, such as chips, microsystems, micromachines, microstructures, microfluidic systems, etc. The pump according to the invention may thereby be integrated in such small-scale systems and devices and provide an efficient and flexible liquid handling.

According to a first aspect, the present invention provides an electroosmotic flow pump for generating a flow in an ionic solution from an inlet to an outlet in a canal, the electroosmotic flow pump comprising a housing with the canal for holding the ionic solution, a membrane separating the canal in a first part in contact with the inlet and a second part in contact with the outlet, the membrane comprising a plurality of perforations having inner surface parts with a zeta potential $\zeta > 10mV$ in an 130-160 mM aqueous salt solution with pH value in the interval 7-7.5, one or more first electrodes in electrical contact with ionic solution held in the first part of the canal and one or more second electrodes in electrical contact with ionic solution held in the second part of the canal, means for impressing an electric potential difference between the first and second electrodes.

Preferably, a thickness of the membrane is in the interval 0.1 -2 $\mu$m. Also, the number of perforations in the membrane is preferably in the interval 5 - 500. in order to ensure a good pumping efficiency, inner radii of the perforations are preferably in the interval 0.1-5 $\mu$m. Further, an average distance between any perforation and its closest neighbour is in the interval 2-100 $\mu$m.

## BRIEF DESCRIPTION OF THE DRAWINGS

Figure 1 is an illustration of the principle of electroosmotic flow in a canal.

Figures 2A and B shows a cross sectional and a top view of an embodiment of the sieve EOF pump according to the present invention. The shown embodiment is applied to an electrophysiological measuring system for generating a flow for positioning of cells.

Figure 3 is a graph showing the flow conductance versus hole diameter for the passage between the upper and lower part of the passage. This exemplifies the needed performance of electroosmotic pumps used in the electrophysiological measuring system of Figures 2A and B.

## DETAILED DESCRIPTION

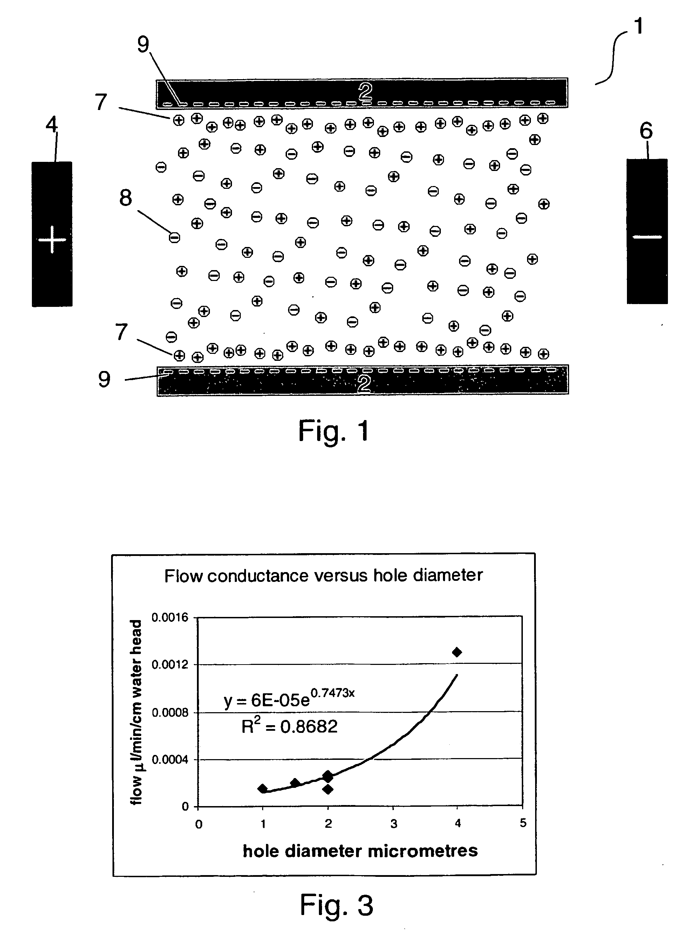

If an ionic liquid in a canal is set in motion using electric fields the phenomenon is called electroosmosis. Electroosmotic flow is generated by application of an electric field through a solution in a canal defined by insulating walls, a schematic illustration of a canal 1 is shown in Figure 1. The canal 1 is formed by walls 2 with electrodes 4 and 6 in each end. A liquid held in the canal 1 is an ionic solution having positive ions 7 and negative ions 8.

The phenomenon depends on ionisation of electronegative sites 9 on surfaces of the walls 2 so that for electroneutrality there is an excess mobile charge in the solution, predominantly located close to the walls within a thin screening layer given by the Debye length $\lambda_D \approx 1 - 10nm$ for the interface. An electric field applied to the solution acts on the excess charge in the screening layer causing the fluid to flow. The quantity and distribution of excess charge in the solution depends on the surface material (density of ionisable sites) and on the solution composition, especially pH and ionic concentration. The charge and distribution is related to a parameter, the zeta ($\zeta$) potential, which can be related to electroosmotic flow. However, although values for the zeta potential are measured and published for material/solution combinations it is not really a readily controllable parameter, and as it arises from the ionisation of surface sites, $\zeta$ and

EOF are very susceptible to changes in surface condition and contamination. A value of 75 mV for $\zeta$ is given in the literature for a silica surface. For glass the values may be twice those for silica but for both the effects of pH and adsorbing species can in practice very significantly reduce the values. Such a value for $\zeta$ may be used in design calculations but it is wise to ensure that adequate performance is not dependant on it being achieved in practice. The direction of EOF is determined by the excess mobile charge in the solution generated by ionisation of the surface sites. As pKa for the ionisable groups on silica or silicate glass is -2, then at neutral pH values the surface is negatively charged and EOF follows the mobile positive ions towards a negatively polarised electrode. The volume flow rate $I_{vol}^{eof}$ associated with electroosmotic flow for a flow canal of length $L$, and constant cross sectional area $A$ is given by

$$I_{vol}^{eof} = \frac{A\varepsilon\zeta}{L\eta}U \, , \qquad (1)$$

where $\varepsilon$ is the permittivity and $\eta$ the viscosity of the liquid, while $\zeta$ is the zeta potential of the interface between the liquid and the canal boundaries. $U$ is the driving voltage applied across the ends of the canal with length $L$ and constant cross sectional area $A$. Eq.1 defines the maximum possible flow rate an EOF pump can deliver with no load connected. The average velocity of the fluid particles in the canal is in general given by $u = I_{vol}/A$, and the electric field strength by $E = U/L$, allowing the definition of the electroosmotic mobility $\mu_{eof} = u/E = \varepsilon\zeta/\eta$ to be independent of any particular geometry of the flow canal containing the EOF pump, and solely to characterise the interface between the liquid and the walls. With a load connected to the pump, the EOF driving force will be accompanied with a pressure driven flow (Poiseuille flow). The volume flow rate associated with laminar Poiseuille flow is given by $I_{vol}^{Poiseuille} = K_{channel}\Delta p$, where $\Delta p$ is the pressure difference across each end of the flow canal, and $K_{canal}$ the flow conductance of the canal. The total flow rate is then given by

$$I_{vol} = K_{channel}\Delta P + \frac{A\mu_{eof}U}{L} \, . \qquad (2)$$

The pressure compliance of the pump is found by putting $I_{vol}=0$, and solving for $\Delta p$:

$$\Delta p_{max} = \frac{I_{vol}^{eof}}{K_{channel}} \, . \qquad (3)$$

The overall performance of any particular EOF pump can be quantified by the performance power given by the product $\Delta p_{max} I_{vol}^{eof}$ , which is a quantity expressed in the unit Watt. The higher power, the better is the overall performance of the pump. If the pump is loaded with flow conductance $K_{load}$ at one end, and a reference pressure at the other end, the pressure difference across the load relatively to the reference pressure is given by:

$$\Delta p_{load} = \frac{-I_{max}}{K_{load} + K_{channel}} \, , \qquad (4)$$

while the volume flow through the load is given by

$$I_{vol}^{load} = K_{load}\Delta p_{load} \, . \qquad (5)$$

A specific choice of pump configuration will give rise to an electrical conductance of the pump canal $G_{canal}$. In response to the EOF driving voltage, the electrolyte inside the pump canal will carry the electrical current $I_q$. Design considerations associated with EOF pumps should comprise heat sinking due to the power dissipation in the pumps. Moreover, the location and design of electrodes should be considered. In an electrophysiology device, the natural choice of electrode material is AgCl, and hence the consumption of such electrodes when operating the pump should be considered. The rate of consumption of electrode material expressed in volume per time unit is given by:

$$\Delta V_{\Delta t} = \frac{I_q m_{AgCl}}{e N_A \rho_{AgCl}}, \qquad (6)$$

where $m_{AgCl}$ =143.321 g/mol and $\rho_{AgCl}$=5.589 g/cm$^3$ is the molar mass and the mass density of AgCl, while $e$=1.602$\times$10$^{-19}$C and $N_A$=6.02$\times$10$^{23}$ mol$^{-1}$ is the elementary unit of charge and the Avogadro constant.

An alternative to the use of consumable electrodes is suggested which involves providing an external electrode linked to the chamber by an electrolyte bridge with high resistance to hydrodynamic flow. This might be a thin canal, similar to that providing the EOF pumping, but with a surface having low density of charged sites (low zeta potential) or where the surface has opposite polarity charge to the EOF pumping canal. In the latter case the low flow conductance canal to the counter electrode contributes towards the EOF pumping. Most wall materials tend, like glass or silica, to be negatively charged in contact with solutions at neutral pH. However it is possible to identify materials which bear positive charge. Alumina based ceramics may be suitable, especially if solutions are on the low pH side of neutral. Alternatively polymer or gel material, such as Agarose, polyacrylamide, Nafion, cellulose acetate, or other dialysis membrane-type materials may produce the bridge with high resistance to hydrodynamic flow. Preferably these should have low surface charge density or an opposite polarity to that of the EOF pumping canal.

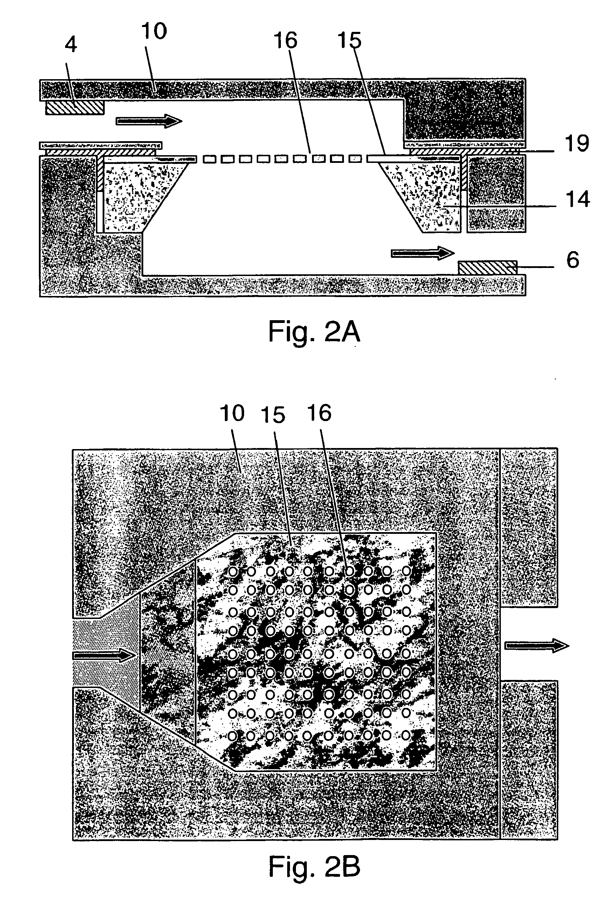

Figures 2A and B show a preferred embodiment of the sieve EOF pump according to the present invention. The shown embodiment is applied to an electrophysiological measuring system for generating a flow for positioning of cells. Figure 2A shows a side view of the device while Figure 2B shows a top view. A housing 10 contains a microstructured unit 14, having a thin membrane 15 on its top surface. The microstructure is fastened in the housing using a sealing adhesive 19. The membrane has a surface consisting of silica or glass. An array of holes 16 with diameters less than one micrometer penetrates the free standing membrane in the centre of the microstructure. When an electrical ion current is drawn between the electrodes 4 and 6, the pumping action takes place in the immediate vicinity of the holes. The arrows indicate the liquid flow path.

In the EOF pump design according to the present invention, the flow canal of the pump is defined as an array of $N$ of small holes in a membrane. Similar operation may be achieved by flow through a porous material forming a $\zeta$ potential with the liquid. This pump may be manufactured by etching a number of parallel holes in a silicon nitride membrane. To compute the key parameters for this pump configuration one has to rely on an experimentally determined flow conductance for a single passage $K_{passage}$, and a geometrical factor $F_{geometry}$ accounting for the effective canal length. In the case for the hole diameter $d$ being comparable with the membrane thickness $t_m$, the effective canal should be asserted somewhat longer than the actual membrane thickness. The sieve geometry is in particular feasible if a spatially very small and compact pump is needed. Below are listed the key parameters.

| Canal flow conductance | Max flow | Electrical conductance |
|---|---|---|
| $K_{channel} = N K_{orifice}$ | $I_{max} = \dfrac{N\pi\left(\dfrac{d}{2}\right)^2}{t_m F_{geometry}} \mu_{eof} U$ | $G_{channel} = \dfrac{N\pi\left(\dfrac{d}{2}\right)^2}{t_m} \sigma$ |

Below are given the key parameters for actual choices of pump dimensions. Feasible pump dimensions for applications related to microfluidics in an electrophysiology device would be: $t_m$=1 $\mu$m, $d$=1$\mu$m, $N$=10, and $F_{geometry}$=2. The calculations are based on conditions relevant for an electrophysiology device, where the liquid used is a physiological buffer solution. However, for most purposes the data corresponding to 150 mM NaCl solution are representative. The asserted electrical conductivity is $\sigma$=0.014 S cm$^{-1}$ and the viscosity $\eta$=8.94$\times$10$^{-4}$ kg m$^{-1}$s$^{-1}$. The calculations are based on a voltage drive of $U$=100 V, and a conservative choice for the zeta potential $\zeta$=15 mV. The flow conductance of the cell receptor passage, which is assumed to be the most significant load to the EOF pump was determined experimentally for a number of hole diameters (see Figure 3). In the calculations a flow conductance $K_{passage}$=3 pl s$^{-1}$ mbar$^{-1}$ corre-

sponding approximately to a 1 $\mu$m diameter hole is assumed.

| Parameter | Value |
|---|---|
| Flow conductance of pump canal $K_{canal}$ [pl s$^{-1}$ mbar$^{-1}$] | 30.0 |
| Maximum volume flow rate $I_{max}$ [nl s$^{-1}$] | 4.58 |
| Maximum pressure $\Delta p_{\mu\alpha\xi}$[mbar] | 152.7 |
| Performance power $\Delta p_{max}I_{max}$[nW] | 70.0 |
| Pressure difference across load $\Delta p_{passage}$ [mbar] | 138.9 |
| Volume flow rate in load $I_{passage}$ [nl s$^{-1}$] | 0.42 |
| Electrical conductance of pump canal $G_{canal}$ [$\mu$S] | 11.0 |
| Electrical current through pump canal $I_q$ [$\mu$A] | 1100 |
| Power dissipation in pump $UI_q$ [mW] | 110 |
| Maximum thermal resistance of required heat sink to keep temperature rise below 20 C˚ [C$^0$ W$^{-1}$] | 181.9 |
| Rate of consumption of AgCl electrodes $\Delta V_{\Delta t}$ [$\mu$m$^3$ s$^{-1}$] | 292400 |

The EOF pump design according to the invention can be fabricated by forming an etched Si membrane containing an array of perforations. The membrane may be mounted in a laminated polymer holder. The holder would define sections for connection the membrane to the canal and a fluid reservoir, all of which can be formed using well known etching and photolithography techniques in a number of materials such as silicon or SU-8 photoepoxy. The configuration is suitable for integration into a pipette well for adding fluid.

The preferred embodiment illustrated in Figures 2A and B may be applied in an electrophysiological measuring system for the generation and control of liquid flow. The liquid flow is used to position cells in a desired measuring configuration. In the following, a number of issues relevant for the present and many other applications of the EOF pump according to the invention will be described.

Priming is the process required to fill the device under consideration by liquid for the first time before operation. The electroosmotic driving force requires, that both electrodes are immersed in liquid before flow can be achieved. The different EOF pump configurations proposed may to some extent prime spontaneously by means of capillary forces in the narrow flow canals. However, it may not be possible to prime the whole pump chamber containing both electrodes solely by means of capillary forces. Considering the rate of consumption of the AgCl electrodes, thin film electrodes deposited between the glass plates are not likely to endure the whole operational cycle of the device. For the sieve configuration the situation may be even worse. Despite the device under consideration is considered to be disposable, bulk electrodes are preferable. A feasible solution to this problem could be the use of adequately located thin film electrodes only for priming of the pump chamber containing the bulk electrodes. The bulk electrodes can take over after the priming procedure. Another possible solution would be to prime the whole device by means of gas pressure drive applied to the pump and pipetting ports before proper operation. Even for devices with many parallel measure sites, the priming could readily be done for all sites in parallel, by pipetting liquid onto all sites and priming by gas pressure applied to all sites simultaneously.

In one possible cell positioning procedure, flow canals on a front side and a rear side of a membrane with a passage are incorporated into the device. The front side refers to the side where cells are loaded and where the extra cellular reference electrode for the electrophysiology measurement is placed, while the rear side refers to the side where suction is applied to drag the cells onto the opening of the passage, and where the intra cellular electrode is placed. The front side flow canal passes over the passage and is connected to a pump (EOF pump or any other pump with similar performance) at one end, and a pipetting well at the other end. The volume of the front side flow canal should be adequately low to ensure that once a cell has entered the canal, a flow maintained by the rear side pump to the passage is capable, within a short time, of dragging the cell to the position of the passage to establish the giga seal. A narrow front side flow canal enables the detection of cells passing the canal using the same principle as in a Coulter counter. The detection may be realised by an electrical measurement of the canal electrical resistance with two electrodes, one at each end of the canal. When a cell enters the flow canal it expels a volume of buffer solution, which consequently cannot contribute to the conductance. The relative change in electrical resistance is therefore given by the ratio of cell volume to canal volume. In addition a spreading resistance contribution is expected. This is however small if the cross sectional area of the cell is small compared to the cross sectional area of the flow canal. The change in canal resistance is calculated by:

$$\Delta R = R_c \frac{V_{cell}}{V_c} F_s , \qquad (7)$$

where $V_{cell}$, and $V_c$ are the volumes of the cell and the canal respectively. $R_c$ is the electrical resistance of the canal and $F_s$ is the geometrical factor accounting for the spreading resistance associated with a cell being inside the canal. $F_s$ is a number slightly larger than 1, and depends on the relative cross sectional areas of the cell and the flow canal. If canal width becomes comparable to cell size, the geometrical factor may however be quite large, corresponding to the situation where the spreading resistance dominates over the buffer volume exchange effect. The rear side flow canal need not be very narrow, and should be equipped with either one pump port at one end and connected directly to the passage at the other end, or alternatively equipped with two pump ports, one at each end with the passage placed in the middle of the canal. The two pump ports version should be chosen if exchange of the intra cellular buffer is desired during operation of the device. A statistical approach may be employed in order to estimate the required waiting time before a cell loaded into the pipetting well connected to the front side flow canal has passed the canal with a certain probability. This probability will mainly depend on the concentration of cells in the suspension $C_c$, the average flow velocity $u_c$ in the front side flow canal and the cross sectional area $A_f$ of the flow canal. The average number of cells passing the canal during the time $t$ can be found from:

$$\beta(t) = C_c A_f u_c t . \qquad (8)$$

The probability $p(t)$ that at least one cell has passed the canal during the time $t$ is then given by the Poisson distribution:

$$p(t) = \sum_{n=1}^{\infty} \frac{\beta(t)^n \exp(-\beta(t))}{n!} \qquad (9)$$

To demonstrate this positioning scheme one may for simplicity of calculation assume a front side flow canal of circular cross section of radius $r_c$=25 $\mu$m and length $L_c$=0.25 mm. The volume and flow conductance of this flow canal is respectively given by $V_c$=0.5 nl and $K_c = \dfrac{\pi r_c^4}{8\eta L_c} = 69$ nl s$^{-1}$ mbar$^{-1}$. The average flow velocity of pressure driven Poiseuille flow will be 35 mm s$^{-1}$ per mbar of driving pressure difference. For a typical cell radius $r_{cell}$=6 $\mu$m, the resistance change given by Eq.7 will be approximately 177$\Omega$ out of the total canal resistance of 90.9k$\Omega$, i.e. a relative change of 0.19 %. Here a geometrical factor of 1.06, accounting for the spreading resistance, has been assumed. With a front side drive pressure difference of only 1 mbar, within 2 seconds 4.1 cells will on average have passed the canal, and at least one cell will have passed with probability 98.4%. This positioning scheme relies on the ability to stop the front side flow as soon as a cell has entered the canal. This requires fast electronics, and a method to avoid this is to consecutively apply small pressure pulses to the front side flow canal, until the presence of a cell inside the canal is detected by means of the Coulter counter principle. Considering the tiny volume of the front side flow canal any of the proposed EOF pump types mounted on the rear side flow canal would be able to suck the cell into position at the passage within a fraction of a second. The cell detection electronics of the Coulter counter can be made of the same type as needed in the electrophysiology measurements of ion channel response.

The sieve EOF pump according to the invention is based on a versatile design and can be applied in numerous small-scale systems and devices, such as chips, microsystems, micromachines, microstructures, microfluidic systems, etc. The electrophysiological measuring system described in the above, being a specific illustrative example, does not limit the scope of the invention or the range of possible applications.

## Claims

1. An electroosmotic flow pump for generating a flow in an ionic solution from an inlet to an outlet in a canal, the electroosmotic flow pump comprising a housing (10) with the canal I1) for holding the ionic solution, a membrane (15) separating the canal in a first part in contact with the inlet and a second part in contact with the outlet, the membrane comprising a plurality of perforations (16) having inner surface parts with a zeta potential $\zeta > 10mV$ in an 130-160 mM aqueous salt solution with pH value in the interval 7-7.5, one or more first electrodes in electrical contact with ionic solution held in the first part of the canal and one or more second electrodes in electrical contact with ionic solution held in the second part of the canal, means for impressing an electric potential difference between the first and second electrodes.

2. An electroosmotic flow pump according to claim 1, wherein a thickness (tm) of the membrane is in the interval 0.1 - 2 $\mu$m.

3. An electroosmotic flow pump according to any of the preceding claims, wherein the number of perforations (N) in the membrane is in the range 5 - 500.

4. An electroosmotic flow pump according to any of the preceding claims, wherein inner radii of the perforations are in the interval 0.1 - 5 $\mu$m.

5. An electroosmotic flow pump according to any of the preceding claims, wherein an average distance between any perforation and its closest neighbour is in the interval 2 - 100 $\mu$m.

## Patentansprüche

1. Elektroosmotische Strömungspumpe zur Erzeugung einer Strömung in einer ionischen Lösung von einem Einlass zu einem Auslass in einem Kanal, wobei die elektroosmotische Strömungspumpe folgendes umfasst: ein Gehäuse (10) mit einem Kanal (1) zur Aufnahme der ionischen Lösung, eine Membran (15), die den Kanal in einen ersten Teil in Verbindung mit dem Einlass und einen zweiten Teil in Verbindung mit dem Auslass unterteilt, wobei die Membran eine Vielzahl von Perforationen (16) aufweist, die innere Oberflächenteile mit einem Zeta-Potential $\zeta > 10$ mV in einer 130-160 mM wässrigen Salzlösung mit einem pH-Wert im Bereich von 7 bis 7,5, sowie eine oder mehrere erste Elektroden in elektrischem Kontakt mit der im ersten Teil des Kanals enthaltenen ionischen Lösung und eine oder mehrere zweite Elektroden in elektrischem Kontakt mit der in dem zweiten Teil des Kanals enthaltenen ionischen Lösung, sowie Einrichtungen zur Einprägung einer elektrischen Potentialdifferenz zwischen den ersten und den zweiten Elektroden.

2. Elektroosmotische Strömungspumpe nach Anspruch 1, bei der die Dicke (tm) der Membran im Intervall von 0,1 $\mu$m bis 2 $\mu$m liegt.

3. Elektroosmotische Strömungspumpe nach einem der vorhergehenden Ansprüche, bei der die Anzahl von Perforationen (N) in der Membran im Bereich von 5 bis 500 liegt.

4. Elektroosmotische Strömungspumpe nach einem der vorhergehenden Ansprüche, bei der die inneren Radien der Perforationen im Intervall von 0,1 $\mu$m bis 5 $\mu$m liegen.

5. Elektroosmotische Strömungspumpe nach einem der vorhergehenden Ansprüche, bei der ein mittlerer Abstand zwischen irgendeiner der Perforationen und ihrem nächsten Nachbarn im Intervall von 2 $\mu$m bis 100 $\mu$m liegt.

**EP 1 432 500 B1**

**Revendications**

1. Pompe à écoulement électro-osmotique destinée à générer un écoulement dans une solution ionique, d'une entrée à une sortie dans un canal, la pompe à écoulement électro-osmotique comprenant un carter (10) avec le canal (11) pour contenir la solution ionique, une membrane (15) séparant le canal en une première partie en contact avec l'entrée et une deuxième partie en contact avec la sortie, la membrane comprenant une pluralité de perforations (16) comportant des parties de surface intérieure d'un potentiel zêta $\zeta$ > 10 mV dans une solution saline aqueuse de 130 à 160 mM avec une valeur de pH dans l'intervalle de 7 à 7,5, une ou plusieurs premières électrodes en contact électrique avec la solution ionique contenue dans la première partie du canal et une ou plusieurs deuxièmes électrodes en contact électrique avec la solution ionique contenue dans la deuxième partie du canal, des moyens pour appliquer une différence de potentiel électrique entre les premières et deuxièmes électrodes.

2. Pompe à écoulement électro-osmotique selon la revendication 1, dans laquelle une épaisseur (tm) de la membrane se situe dans l'intervalle de 0,1 à 2 $\mu$m.

3. Pompe à écoulement électro-osmotique selon l'une quelconque des revendications précédentes, dans laquelle le nombre de perforations (N) dans la membrane se situe dans la plage de 5 à 500.

4. Pompe à écoulement électro-osmotique selon l'une quelconque des revendications précédentes, dans laquelle les rayons intérieurs des perforations se situent dans l'intervalle de 0,1 à 5 $\mu$m.

5. Pompe à écoulement électro-osmotique selon l'une quelconque des revendications précédentes, dans laquelle une distance moyenne entre une perforation quelconque et sa voisine la plus proche se situe dans l'intervalle de 2 à 100 $\mu$m.

8

Fig. 1

Flow conductance versus hole diameter

$y = 6E\text{-}05e^{0.7473x}$

$R^2 = 0.8682$

Fig. 3

Fig. 2A

Fig. 2B